# EUROPÄISCHE PATENTSCHRIFT

(11) **EP 1 211 423 B1**
(45) Veröffentlichungstag und Bekanntmachung des Hinweises auf die Patenterteilung: **16.09.2009**
(21) Anmeldenummer: 01127921.3
(22) Anmeldetag: 23.11.2001
(51) Int. Cl.: F04D 13/06, B01D 35/06

(54) **Elektromotor zum Antrieb einer Kreiselpumpe für insbesondere Heizungsanlagen**
Electromotor for driving a centrifugal pump for in particular a heating system
Moteur électrique pour entrainer une pompe centrifuge pour en particulier un système de chauffage

(30) Priorität: 30.11.2000 DE 10059457
(43) Veröffentlichungstag der Anmeldung: 05.06.2002
(73) Patentinhaber: GRUNDFOS A/S, DK-8850 Bjerringbro (DK)
(72) Erfinder: Jensen, Flemming Bans, 8230 Abyhoi (DK); Svarre, Erik B., 8850 Bjerringbro (DK); Larsen, Tom Eklundh, 8860 Ulstrup (DK)
(74) Vertreter: Vollmann, Heiko

(56) Entgegenhaltungen:
- DE-A- 3 701 562
- DE-A- 3 803 774
- US-A- 5 944 986

## Beschreibung

Die Erfindung geht aus von einem Elektromotor zum Antrieb einer Kreiselpumpe für insbesondere Heizungsanlagen, wobei der Elektromotor ein wasserführendes Spaltrohr, eine darin in einem vorderen Gleitlager und einem hinteren Gleitlager abgestützte Antriebswelle mit einem Rotor des Motors sowie einen Lagerschild am Vorderende des Spaltrohres aufweist, der das vordere Gleitlager trägt und wenigstens mit einem Durchlass für einen Anteil der Förderflüssigkeit der Kreiselpumpe versehen ist, wobei dem Durchlass ein Abscheidemittel zugeordnet ist.

In der Offenlegungsschrift DE 37 01 562 A1 ist ein Elektromotor zum Antrieb einer Kreiselpumpe für Heizungsanlagen offenbart, der ein Spaltrohr aufweist, an dessen Vorderende ein Lagerschild befestigt ist, der ein vorderes zentrales Gleitlager aufweist, in dem die Antriebswelle des Motors gelagert ist. In dem Lagerschild ist eine Durchlassausbildung vorgesehen, durch welche ein Anteil der Förderflüssigkeit der Kreiselpumpe in das Spaltrohr gelangt. Dieser Durchlassausbildung ist ein Sieb oder Filter zugeordnet, um zu vermeiden, dass Schmutzpartikel, die sich in dem Förderflüssigkeitsanteil befinden, in das Innere des Spaltrohres eindringen können, um den Betrieb des im Spaltrohr befindlichen Rotors nicht zu gefährden. Dieses Filter hält zwar Schmutzpartikel und dergleichen aus dem Förderstrom der Kreiselpumpe fern, kann jedoch nicht verhindern, dass in dem Förderflüssigkeitsanteil enthaltene Magnetitpartikel in das Innere des Spaltrohres gelangen, weil die Partikelgröße des Magnetits bis in den Mikrometerbereich herunterreicht. Magnetitpartikel sind jedoch für Permanentmagnetrotoren in den Spaltrohren von Nassläufermotoren besonders nachteilig, da sie sich an Wandflächen im Bereich des Magnetfeldes des betreffenden permanentmagnetrotors ablagern und im Laufe der Zeit zum Blockieren des Rotors führen.

Die Aufgabe der Erfindung besteht in der Verbesserung eines Elektromotors der einleitend angeführten Art dahingehend, dass der in dessen Spaltrohr gelangende Förderflüssigkeitsanteil frei oder im Wesentlichen frei von Magnetitpartikeln ist.

Die Lösung dieser Aufgabe ist in dem Anspruch 1 angegeben.

Durch diese Lösung werden Magnetitpartikel aus dem in das Spaltrohr gelangenden Förderflüssigkeitsanteil der Kreiselpumpe abgeschieden und dringen somit nicht in das Innere des Spaltrohres ein. Dadurch ist es vermieden, wenigstens jedoch stark herabgesetzt, dass sich Magnetitpartikel innerhalb des Spaltrohres an Wandflächen absetzen und störende Schichten aufbauen können. Somit ist die Betriebsdauer des Rotors auf der Antriebswelle des Elektromotors, insbesondere wenn es sich um einen Permanentmagnetrotor handelt, wesentlich verlängert, weil sich in dem Ringspalt zwischen dem Rotor und dem Spaltrohr keine Blockierschichten aus Magnetit aufbauen können.

Eine erste vorteilhafte, besonders kostengünstig herzustellende Ausgestaltung der Erfindung besteht darin, dass der Lagerschild mit vorzugsweise mehreren und umfangsmäßig mit Abstand voneinander angeordneten Durchlässen versehen ist und dass den Durchlässen wenigstens eine gemeinsame, die Durchlässe überdeckende, permanentmagnetische Filterplatte zugeordnet ist. Die gemeinsame Filterplatte, die vor oder hinter dem Lagerschild angeordnet sein kann, bietet den Vorteil, dass eine besonders große Filterfläche zur Verfügung steht.

Eine weitere vorteilhafte Ausgestaltung der Erfindung besteht darin, dass ein knopfförmiger, permanentmagnetischer Körper, der porös oder nicht porös sein kann, in dem oder ggf. in jedem Durchlass des Lagerschildes befestigt ist, der ein oder mehrere Löcher für den Durchfluss des Förderflüssigkeitsanteils aufweist und in einer Fassung gehaltert ist. Die Fassung besteht aus einer ersten, zuströmseitig offenen und in dem Durchlass des Lagerschildes eingesetzten Kappe und aus einer zweiten, den knopfförmigen Körper rückseitig mit Abstand abdeckenden Kappe besteht, wobei die beiden Kappen einen Ausströmungsspalt um den Außenumfang des knopfförmigen Körpers herum freilassen. Der knopfförmige Körper ist so magnetisiert, dass ein Abschnitt der magnetischen Feldlinien dieses Körpers durch sein Loch bzw. durch seine Löcher hindurch verläuft.

Die Erfindung ist nachstehend anhand zweier in den anliegenden Zeichnungen dargestellter Ausführungsbeispiele näher erläutert. Es zeigen:
- Fig. 1: eine erste Ausführungsform im Axialschnitt,
- Fig. 2: eine teilweise Darstellung einer zweiten Ausführungsform im Axialschnitt und
- Fig. 3: die Einzelheit X in Fig. 2 in auseinandergezogener Perspektivdarstellung.

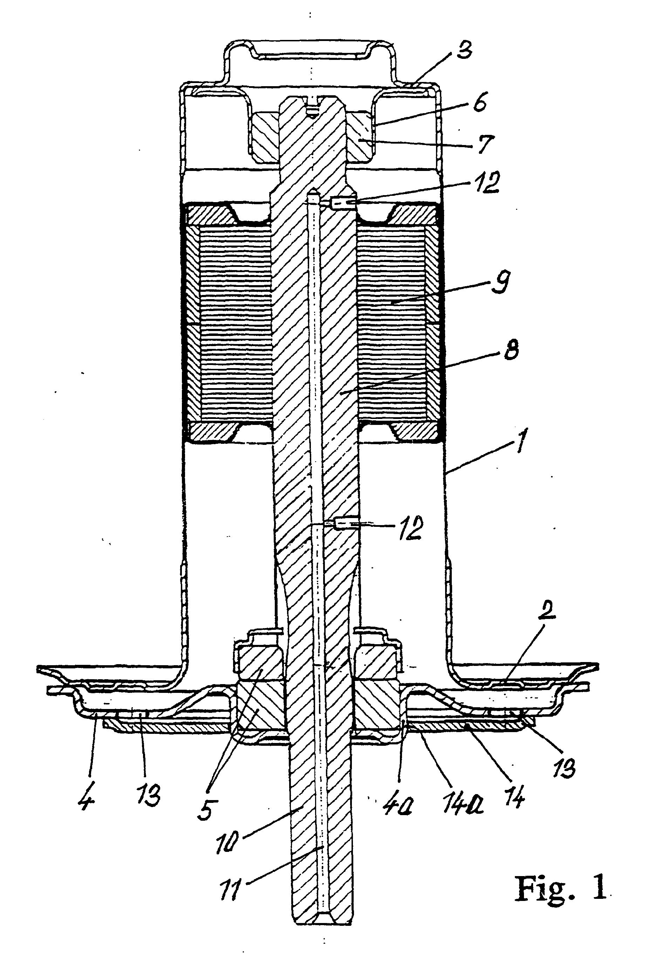

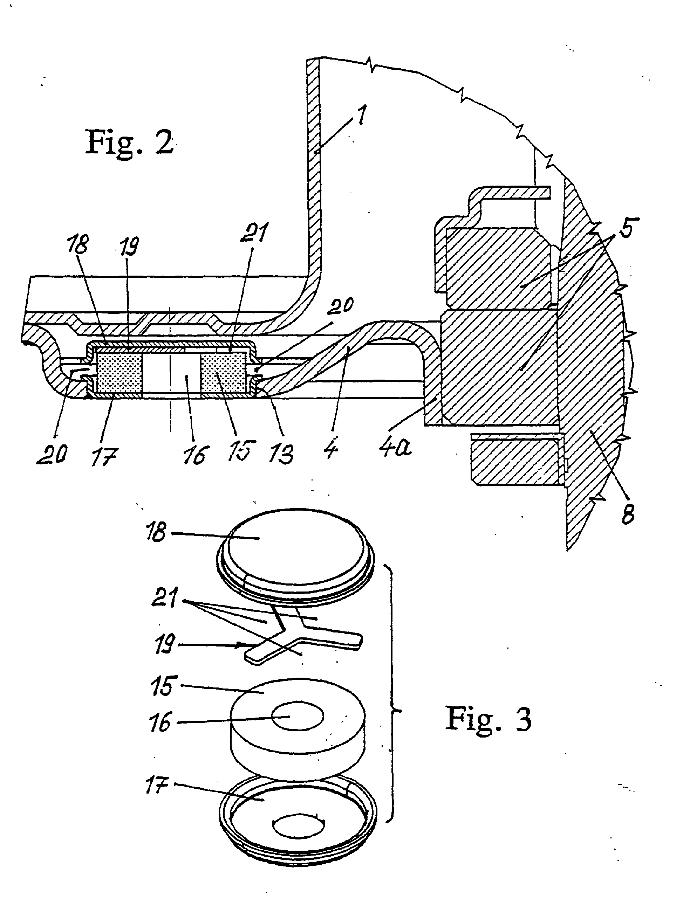

Die Figuren 1 und 2 zeigen von dem jeweiligen Elektromotor nur dessen Spaltrohrtopf mit den darin vorgesehenen Bestandteilen, weil der übrige Aufbau des jeweiligen Motors nicht Gegenstand der Erfindung ist.

Daher ist in der Fig. 1 ein Spaltrohr 1 in Form eines Spaltrohrtopfes mit einem vorderen Flansch 2 und einem hinteren Boden 3 gezeigt. Am vorderen Flansch 2 ist ein Lagerschild 4 befestigt, an welchem in üblicher Weise das vordere Gleitlager 5 angeordnet ist. Am Boden 3 des Spaltrohres 1 ist eine Lagerhülse 6 befestigt, die ein hinteres Gleitlager 7 trägt. In beiden Lagern 5 und 7 ist eine Antriebswelle 8 gelagert, auf welcher ein Rotor 9, vorzugsweise ein Permanentmagnetrotor, drehfest angeordnet ist und im Inneren des Spaltrohres 1 rotiert. Ein vorderer Abschnitt 10 der Antriebswelle 8 ragt aus dem Lagerschild 4 heraus und trägt in üblicher Weise ein Pumpenlaufrad (nicht gezeigt). Die Antriebswelle 8 ist mit einer Axialbohrung versehen, die sich bis in den Bereich des hinteren Gleitlagers 7 erstreckt und über mehrere kurze Querbohrungen 12 mit dem Inneren des Spaltrohres 1 kommuniziert. Alternativ kann die Entlüftung des hinteren Raums des Spaltrohres 1 auch auf andere Weise erfolgen, so dass es nicht nötig ist, dass sich die Axialbohrung 11 bis in den hinteren Teil des Spaltrohres erstreckt und dort mit einer Querbohrung versehen ist. In bekannter Weise dringt im Betrieb des Elektromotors ein Anteil der von dem genannten Pumpenlaufrad in einem Heizungskreis geförderten Förderflüssigkeit durch den Lagerspalt zwischen dem vorderen Gleitlager 5 und der Antriebswelle 8 in das Spaltrohr und füllt dieses unter Verdrängung der Luft darin mit einem Anteil der Förderflüssigkeit aus. Dadurch werden die Gleitlager 5 und 7 geschmiert und der Rotor 9 gekühlt.

Das hintere Gleitlager 7 kann entfallen, wenn das vordere Gleitlager 5 so konstruiert ist, dass es die Antriebswelle 8 mit dem Rotor 9 sicher tragen kann.

In der Ausführungsform nach Fig. 1 weist der Lagerschild 4 mehrere, umfangsmäßig mit Abstand voneinander angeordnete Durchlässe 13 auf, beispielsweise in Form von kreisrunden Löchern. Alternativ kann auch nur ein Durchlass 13 vorgesehen sein. Weiterhin ist eine gemeinsame Filterplatte 14 aus Permanentmagnetmaterial als Abscheidemittel für Magnetitpartikel, die in dem in das Innere des Spaltrohres 1 strömenden Förderflüssigkeitsanteil enthalten sind, vorgesehen und dem Lagerschild 4 so zugeordnet, dass der Durchlass oder alle Durchlässe 13 durch die Filterplatte abgedeckt ist bzw. sind. Wie es Fig. 1 zeigt, ist die gemeinsame Filterplatte 14 vor den Durchlässen 13 angeordnet. Alternativ ist es auch möglich, dass sie hinter den Durchlässen 13 angeordnet ist. Des Weiteren ist es auch möglich, zwei Filterplatten vorzusehen, wobei die eine vor und die andere hinter den Durchlässen 13 an dem Lagerschild 4 befestigt ist. Die gemeinsame Filterplatte 14, die vorzugsweise durch ein Sinterverfahren hergestellt wird, erstreckt sich vorteilhaft sehr weit radial einwärts, um eine sehr große Filterfläche zur Verfügung zu stellen. Im gezeigten Fall liegt der Innenrand 14a der Filterplatte 14 am Fassungsring 4a des Lagerschildes 4 für das vordere Gleitlager 5 an.

In Fig. 2 ist eine weitere Ausführungsform eines permanentmagnetischen Abscheidemittels in dem Lagerschild 4 für Magnetitpartikel gezeigt. In diesem Fall ist der Lagerschild ebenfalls mit einem Durchlass oder mit mehreren, umfangsmäßig mit Abstand voneinander angeordneten Durchlässen 13 versehen, der bzw. die jedoch einen größeren Durchmesser aufweist bzw. aufweisen als diejenigen in Fig. 1, weil darin jeweils ein permanentmagnetisches Abscheidemittel angeordnet ist. Dieses ist ein knopfförmiger Körper 15, der vorzugsweise auch im Sinterverfahren hergestellt ist, und ein lochfreier Filterkörper oder. wie es Fig. 2 zeigt, ein durchlochter Filterkörper sein kann. Im letzteren Fail kann der Körper 15 auch nicht porös, also nicht filternd, sein.

Der knopfförmige Filterkörper 15, oder alternativ Massivkörper, nach Fig. 2 ist mit einem Loch 16 und mit einer Fassung versehen, welch letztere in dem oder jedem Durchlass 13 des Lagerschildes 4 fest angeordnet ist. Die Fassung für jeden Körper besteht aus einer ersten, zuströmseitig offenen und in dem zugehörigen Durchlass 13 des Lagerschildes 4 fest eingesetzten Kappe 17 und aus einer zweiten, den Körper 15 rückseitig mit Abstand abdeckenden Kappe 18. Dieser Abstand ist durch ein eine Flüssigkeitsausströmung aus dem Loch 16 zulassendes Abstandselement 19, z. B. ein sternförmiges Teil mit drei Armen, wie es in Fig. 3 deutlich zu erkennen ist, erreicht. Das Abstandselement 19 liegt auf der Rückseite des Körpers 15 auf und stützt die hintere Kappe 18 ab. Beide Kappen 17 und 18 lassen außerdem auf dem Außenumfang des durchlochten Filterkörpers 15 einen ringförmigen Ausströmungsspalt 20 frei.

In weiterer Ausbildung des oder der vorstehend beschriebenen knopfförmigen permanentmagnetischen Körper 15 kann so vorgegangen sein, dass der oder jeder durchlochte Körper so magnetisiert ist, dass ein Abschnitt der magnetischen Feldlinien des oder der Körper durch das Loch 16 oder alternativ durch mehrere solcher Löcher hindurch verlaufen.

Die Wirkung des oder der knopfförmigen Körper 15 ist wie folgt. Ein Anteil der von der Kreiselpumpe geförderten Flüssigkeit tritt in das Loch 16 des permanentmagnetischen knopfförmigen Körpers 15 ein und strömt durch die Spalte 21, die mittels des Abstandselements 19 zwischen dem Körper 15 und der hinteren Kappe 18 geschaffen sind, radial aus und gelangt dann weiter in das Innere des Spaltrohres 1, um dieses auszufüllen. Dabei lagern sich Magnetitpartikel an den flüssigkeitsberührten freien Flächen des magnetischen Körpers 15 und der Kappen 17 und 18, soweit diese aus magnetisierbarem Material bestehen, ab und werden dadurch aus dem in das Spaltrohr eindringenden Förderflüssigkeitsanteil abgeschieden, wobei die Abscheidung am stärksten in dem Loch 16 ist, weil dort die magnetischen Feldlinien ihre maximale Dichte aufweisen. Entsprechendes gilt, wenn mehrere Löcher in dem Körper 15 vorgesehen sind.

In dem Fall, in dem der permanentmagnetische knopfförmige Körper 15 auch porös, wie dargestellt, und damit durch seine Masse hindurch flüssigkeitsdurchlässig ist, dringt zusätzlich Flüssigkeit aus dem Loch 16 radial durch Körpermasse hindurch und gelangt dann weiter über den Ausströmungsspalt 20 zwischen den Kappen 17 und 18 in das Spaltrohr 1. Hierbei werden zusätzlich innerhalb des Körpers 15 Magnetitpartikel abgeschieden. Dies gilt auch bei Anwendung mehrerer Löcher in dem Filterkörper.

In dem Fall, in dem der permanentmagnetische knopfförmige Körper 15 keine Durchgangslöcher aufweist, ist er nur porös und wirkt somit als Filter im eigentlichen Sinn. Dadurch lagern sich die Magnetpartikel zu einem erheblichen Teil in seinem Innern ab.

Als weiteres Einsatzgebiet des vorstehend beschriebenen Elektromotors ist beispielsweise der Klimaanlagenbau angeführt.

## Patentansprüche

1. Elektromotor zum Antrieb einer Kreiselpumpe für insbesondere Heizungsanlagen, wobei der Elektromotor ein wasserführendes Spaltrohr (1), eine darin wenigstens in einem vorderen Gleitlager (5) abgestützte Antriebswelle (8) mit einem Rotor (9) des Motors sowie einen Lagerschild (4) am Vorderende des Spaltrohres (1) aufweist, der das vordere Gleitlager (5) trägt und mit wenigstens einem Durchlass (13) für einen Anteil aus der Förderflüssigkeit der Kreiselpumpe versehen ist, wobei dem Durchlass (13) ein Abscheidemittel zugeordnet ist, **dadurch gekennzeichnet, dass** das Abscheidemittel aus einem Permanentmagnetmaterial besteht.

2. Elektromotor nach Anspruch 1, **dadurch gekennzeichnet, dass** der Lagerschild (4) mit einem oder mehreren umfangsmäßig mit Abstand voneinander angeordneten Durchlässen (13) versehen ist und dass dem bzw. den Durchlässen (13) wenigstens eine gemeinsame, diese Durchlässe (13) überdeckende Filterplatte (14) als permanentmagnetisches Abscheidemittel zugeordnet ist.

3. Elektromotor nach Anspruch 2, **dadurch gekennzeichnet, dass** die gemeinsame Filterplatte (14) eine gesinterte Filterplatte ist.

4. Elektromotor nach Anspruch 1, **dadurch gekennzeichnet, dass** ein lochfreier knopfförmiger Filterkörper (15) als permanentmagnetisches Abscheidemittel in dem Durchlass (13) des Lagerschildes (4) befestigt ist.

5. Elektromotor nach Anspruch 1, **dadurch gekennzeichnet, dass** als ein knopfförmiger Körper (15) mit mindestens einem Loch (16) für den Durchlass des Förderflüssigkeitsanteils als permanentmagnetisches Abscheidemittel vorgesehen und in einer Fassung gehalten ist, dass die Fassung aus einer ersten, zuströmseitig offenen und in dem Durchlass (13) des Lagerschildes (4) eingesetzten Kappe (17) und aus einer zweiten, den knopfförmigen Körper (15) rückseitig mit Abstand abdeckenden Kappe (18) besteht, dass die beiden Kappen (17, 18) einen Ausströmungsspalt (19) um den Außenumfang des knopfförmigen Körpers (15) herum freilassen und dass der knopfförmige Körper (15) so magnetisiert ist, dass ein Abschnitt seiner magnetischen Feldlinien durch das Loch (16) bzw. durch die Löcher hindurch verläuft.

6. Elektromotor nach Anspruch 5, **dadurch gekennzeichnet, dass** der knopfförmige Körper (15) porös ausgebildet ist.

7. Elektromotor nach Anspruch 4, 5 oder 6, **dadurch gekennzeichnet, dass** der knopfförmige Körper (15) als Sinterkörper ausgebildet ist.

## Claims

1. An electric motor for the drive of a centrifugal pump, in particular for heating installations, wherein the electric motor comprises a water-leading can (1), a drive shaft (8) with a rotor (9) of the motor, said drive shaft being supported in the can at least in one front sliding bearing (5), as well as a bearing end-plate (4) at the front end of the can (1), said bearing end-plate carrying the front sliding bearing (5) and being provided with at least one passage (13) for a share of the delivery fluid of the centrifugal pump, wherein a separating means is assigned to the passage (13), **characterised in that** the separating means consists of a permanent magnet material.

2. An electric motor according to claim 1, **characterised in that** the bearing end-plate (4) is provided with one or more passages (13) which are arranged peripherally at a distance to one another, and that at least one common filter plate (14) covering the passages (13), as a permanent magnetic separating means, is assigned to the passage or the passages (13).

3. An electric motor according to claim 2, **characterised in that** the common filter plate (14) is a sintered filter plate.

4. An electric motor according to claim 1, **characterised in that** a hole-free button-like filter body (15) as a permanent magnetic separating means is fastened in the passage (13) of the bearing end-plate (4).

5. An electric motor according to claim 1, **characterised in that** a button-like body (15) with at least one hole (16) for the passage of the delivery fluid share is provided as permanent magnetic separating means and is held in a mount, that the mount consists of a first cap (17) which is open on the incoming flow side and is inserted in the passage (13) of the bearing end-plate (4), and of a second cap (18) which covers the button-like body (15) on the rear side at a distance, that the two caps (17, 18) leave free an exit flow gap (19) around the outer periphery of the button-like body (15) and that the button-like body (15) is magnetised such that a section of its magnetic field lines runs through the hole (16) or through the holes.

6. An electric motor according to claim 5, **characterised in that** the button-like body (15) is designed in a porous manner.

7. An electric motor according to claim 4, 5 or 6, **characterised in that** the button-like body (15) is designed as a sinter body.

## Revendications

1. Moteur électrique destiné à entraîner une pompe centrifuge en particulier pour des installations de chauffage, le moteur électrique comprenant une gaine de moteur (1) conduisant l'eau, un arbre moteur (8) s'appuyant à l'intérieur sur au moins un palier lisse avant (5) et équipé d'un rotor (9) du moteur, ainsi qu'une flasque (4) au niveau de l'extrémité avant de la gaine de moteur (1), qui porte le palier lisse avant (5) et qui comporte au moins un passage (13) pour une portion du fluide transporté par la pompe centrifuge, un moyen de séparation étant associé au passage (13), **caractérisé en ce que** le moyen de séparation se compose d'un matériau de type aimant permanent.

2. Moteur électrique selon la revendication 1, **caractérisé en ce que** la flasque (4) comporte un ou plusieurs passages (13) répartis sur la périphérie, à distance les uns des autres, et **en ce qu'**est associée au(x) passage(s) (13) au moins une plaque de filtre commune (14) recouvrant ces passages (13) en tant que moyen de séparation à aimant permanent.

3. Moteur électrique selon la revendication 2, **caractérisé en ce que** la plaque de filtre commune (14) est une plaque de filtre frittée.

4. Moteur électrique selon la revendication 1, **caractérisé en ce qu'**un corps de filtre en forme de bouton sans trou (15) est fixé dans le passage (13) de la flasque (4) en tant que moyen de séparation à aimant permanent.

5. Moteur électrique selon la revendication 1, **caractérisé en ce qu'**est prévu en tant que moyen de séparation à aimant permanent un corps en forme de bouton (15) comportant au moins un trou (16) pour le passage de la portion de fluide transporté, qui est maintenu dans une monture, **en ce que** la monture se compose d'un premier chapeau (17) ouvert côté amenée et inséré dans le passage (13) de la flasque (4) et d'un second chapeau (18) recouvrant le corps en forme de bouton (15) par l'arrière et à une certaine distance, **en ce que** les deux chapeaux (17, 18) ménagent une fente d'évacuation (19) tout autour de la périphérie externe du corps en forme de bouton (15), et **en ce que** le corps en forme de bouton (15) est magnétisé de façon telle qu'un segment de ses lignes de champ magnétique traverse le trou (16) ou les trous.

6. Moteur électrique selon la revendication 5, **caractérisé en ce que** le corps en forme de bouton (15) est de conception poreuse.

7. Moteur électrique selon la revendication 4, 5 ou 6, **caractérisé en ce que** le corps en forme de bouton (15) est de conception frittée.
